# EUROPEAN PATENT APPLICATION

(11) **EP 2 879 081 A1**
(43) Date of publication of application: **03.06.2015**
(21) Application number: 13823424.0
(22) Date of filing: 10.04.2013
(51) Int. Cl.: G06N 5/04

(54) **RULE MANAGEMENT DEVICE, RULE MANAGEMENT METHOD, AND PROGRAM**

(30) Priority: 24.07.2012 JP 2012164190
(71) Applicant: NEC Corporation, Tokyo 108-8001 (JP)
(72) Inventor: ANDO, Tomohito, Tokyo 108-8001 (JP)
(74) Representative: Vossius & Partner Patentanwälte Rechtsanwälte mbB
(86) International application number: PCT/JP2013/002447
(87) International publication number: WO 2014/016998

(57) **Abstract**

A rule management device that has a display unit (10), an input-acceptance unit (20), and a rule registration unit (30) is provided. The display unit (10) displays, on a screen, a plurality of condition objects that represent a respective plurality of conditions. The input-acceptance unit (20) accepts input that groups the plurality of condition objects on the screen. The rule registration unit (30) performs the following process for each group: if the group contains a plurality of condition objects, the rule registration unit (30) generates and registers a rule whereby a first condition consisting of the logical conjunction of all of the conditions specified by that plurality of condition objects is associated with a given conclusion; and if the group contains only one condition object, the rule registration unit (30) generates and registers a rule whereby the condition specified by that condition object is associated with a given conclusion.

## Description

### Technical Field

The present invention relates to a rule management device, a rule management method, and a program.

### Background Art

PLT1 discloses means that generates a rule in which a conclusion is linked to a condition that is formed by combining a plurality of conditions by ANDs, and means which displays the rule. Specifically, PLT1 discloses means which, after the rule is generated by using a text editor, networks the rule with an existing group of rules by using a rete-network conversion function, and, after that, displays the networked rule on a display with including an editing rule.

### [Citation List]

### [Patent Literature]

[PLT 1] Japanese Unexamined Patent Application Publication No. H9-190352.

### Summary of Invention

### [Technical Problem]

According to a technique disclosed in PLT1, a rule is generated by using a text editor.

Generating a rule by using a text editor causes a problem that it is hard to intuitively comprehend consistency and discrepancy between a given rule and another rule during generation of the rule. For example, a rule may be set by linking a predetermined conclusion to a condition (a dominant condition) that is generated by combining a plurality of conditions (subordinate conditions) by ANDs or ORs. However, when a rule is generated by using a text editor, it is hard to intuitively comprehend consistency and discrepancy between a subordinate condition included in a given rule and a subordinate condition included in another rule. Such a situation is prone to an error, such as redundant generation of the same rule or omission of generating a rule.

Furthermore, in the above-described rule, a certain subordinate condition may be included under dominant conditions of a plurality of rules. Nonetheless, writing conditions of all rules from scratch using a text editor is troublesome.

The objection of the present invention is to provide a technique for reducing errors and forming a rule efficiently.

### [Solution to Problem]

According to the present invention, there is provided a rule management device includes:
display means for displaying a plurality of condition objects that respectively indicate a plurality of conditions on a screen;
input receiving means for receiving an input for grouping the plurality of condition objects on the screen; and
rule registration means for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

According to the present invention, there is provided a program for causing a computer to function as:
display means for displaying a plurality of condition objects that respectively indicate a plurality of conditions on a screen;
input receiving means for receiving an input for grouping the plurality of condition objects on the screen; and
rule registration means for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

According to the present invention, there is provided a rule management method wherein a computer executes:
a display step for displaying a plurality of condition objects that respectively indicate a plurality of conditions on a screen;
an input receiving step for receiving an input for grouping the plurality of condition objects on the screen; and
a rule registration step for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

### [Advantageous Effects of Invention]

According to the present invention, errors can be reduces and a rule can be efficiently formed.

### Brief Description of Drawings

The above described objective, and other objectives, features, and advantages will become further apparent by the following preferred exemplary embodiment and the drawings appended thereto.
[Fig. 1] An example of a functional block diagram of a rule management device of a present exemplary embodiment
[Fig. 2] An example of a screen displayed by a display unit of the present exemplary embodiment
[Fig. 3] An example of a screen displayed by the display unit of the present exemplary embodiment
[Fig. 4] An example of a screen displayed by the display unit of the present exemplary embodiment
[Fig. 5] An example of a screen displayed by the display unit of the present exemplary embodiment
[Fig. 6] An example of a screen displayed by the display unit of the present exemplary embodiment
[Fig. 7] An example of a screen displayed by the display unit of the present exemplary embodiment

### Description of Embodiments

The following will describe an exemplary embodiment of the present invention with reference to the drawings.

A device of the present exemplary embodiment is realized by an arbitrary combination of hardware and software, mainly by a CPU of an arbitrary computer, a memory, a program loaded on the memory (including a program downloaded from a storage medium, such as a CD, a server on the internet, or the like besides a program stored in the memory in advance at a shipment of the device), a storage unit such as a hard disk for storing the program, and an interface for network connection. It will be appreciated for those skilled in the art that variations can be considered for the implementation method and device.

Further, functional block diagrams used in the description of the present exemplary embodiment show blocks of respective functional units instead of structures of hardware units. In these diagrams, although each device is illustrated as being implemented by one piece of equipment, the implementation means is not limited thereto. In other words, each device may be either a physically detached structure or a theoretically detached structure.

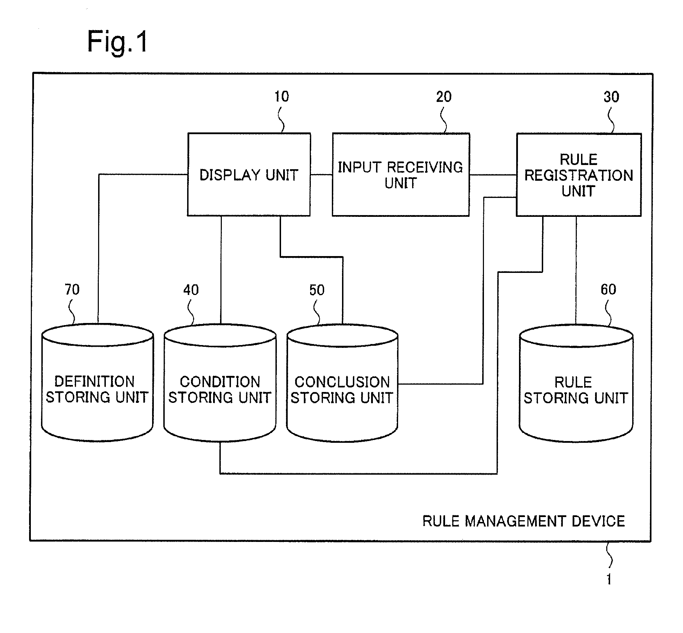

Fig. 1 illustrates an example of a functional block diagram of a rule management device of the present exemplary embodiment. As illustrated, the rule management device 1 of the present exemplary embodiment includes a display unit 10, an input receiving unit 20, and a rule registration unit 30.

The rule management device 1 may further include at least one of a condition storing unit 40, a conclusion storing unit 50, a rule storing unit 60, and a definition storing unit 70. In addition, these storing units may be provided in a device that is different from the rule management device 1. Then, the rule management device 1 may be configured to write data in or retrieve data from the storing units provided in a different device through wired and/or wireless communication.

The following will describe respective units. In addition, the rule management device 1 of the present exemplary embodiment can be utilized when generating a variety of rules. In the description below, as an example, a case of generating a rule regarding a flight schedule of an airplane crew will be exemplified. More specifically, a case of generating a rule that defines prohibited items regarding the flight schedule of the crew will be exemplified.

The display unit 10 displays a plurality of condition objects that respectively indicate a plurality of conditions (hereinafter, "subordinate conditions") on a screen. In addition, the display unit 10 can display one or a plurality of conclusion objects that indicate a predetermined conclusion on the screen where the plurality of condition objects are displayed. The display unit 10 can also display a definition object that indicates a definition of a wording (condition wording) included in the subordinate conditions on the screen where the plurality of condition objects are displayed. The details will be described below.

Contents of the "subordinate conditions" are not particularly restricted, and are items that can be determined in accordance with a rule that is desired to generate. In the case of the present exemplary embodiment, for example, the contents may be a classification of a departure airport and/or an arrival airport of a flight (for example, Haneda Airport, Narita Airport, and the like), a type of flight (for example, passenger plane flight ooo, passenger plane flight ΔΔΔ, cargo plane flight xxx, and the like), a classification of domestic flight and international flight, a classification of flight time (for example, daytime flight, nighttime flight, and the like), a classification of a total landing count within continuous 24 hours (for example, 7 times or more, 6 times or less, and the like), a classification of a total time of flight time, Show-up time (time from punching-in time until flight departure time), and Duty-off time (time from flight arrival time until punching-out time) within continuous 24 hours (for example, 13 hours or more, 15 hours or more, and the like), a classification of transit time (waiting time between flights) (for example, less than 60 minutes, less than 50 minutes, and the like), a classification of a holiday count within one week (for example, once, twice, and the like), and the like. In addition, the conditions listed above are only an example without limitation.

For example, the condition storing unit 40 can store a plurality of such subordinate conditions. Then, the display unit 10 displays, on the screen, a plurality of condition objects that respectively indicate the plurality of subordinate conditions, such as those described above, stored in the condition storing unit 40.

A content of the "conclusion" is not particularly restricted, and is an item that can be determined in accordance with a rule that is desired to generate. In the case of the present exemplary embodiment where a rule defining prohibited items regarding a flight schedule of a crew is generated, the conclusion can be, for example, "breach". For example, the conclusion storing unit 50 may store such the conclusion. In addition, the conclusion storing unit 50 may store one conclusion or a plurality of kinds of conclusions. Then, the display unit 10 can display, on the screen, one or a plurality of conclusion objects that indicate the one or plurality of kinds of conclusions stored in the conclusion storing unit 50. In addition, the display unit 10 may be able to display, on the screen, a plurality of conclusion objects that indicate the same kind of conclusions.

"Definition" is a definition of wording (condition wording) included in a subordinate condition. For example, a definition of a condition wording "holiday" included in the above-described listed subordinate condition may be "no attendance of continuous 36 hours or more" or the like. In addition, a condition wording may include a wording (a first condition wording) that has a different definition for each condition. For example, the condition wording "Show-up time" included in the above subordinate condition may indicate different time depending on a classification of domestic flight and international flight. Specifically, the Show-up time of a crew who works on board a domestic flight may be 60 minutes or more, and the Show-up time of a crew who works on board an international flight may be 90 minutes or more.

The definition storing unit 70, for example, can store such a definition. The definition storing unit 70 does not necessarily have to store definitions of the whole condition wordings, but can store a part of definitions of the condition wordings. Then, the display unit 10 can display, on the screen, a definition object that indicates a definition stored in the definition storing unit 70.

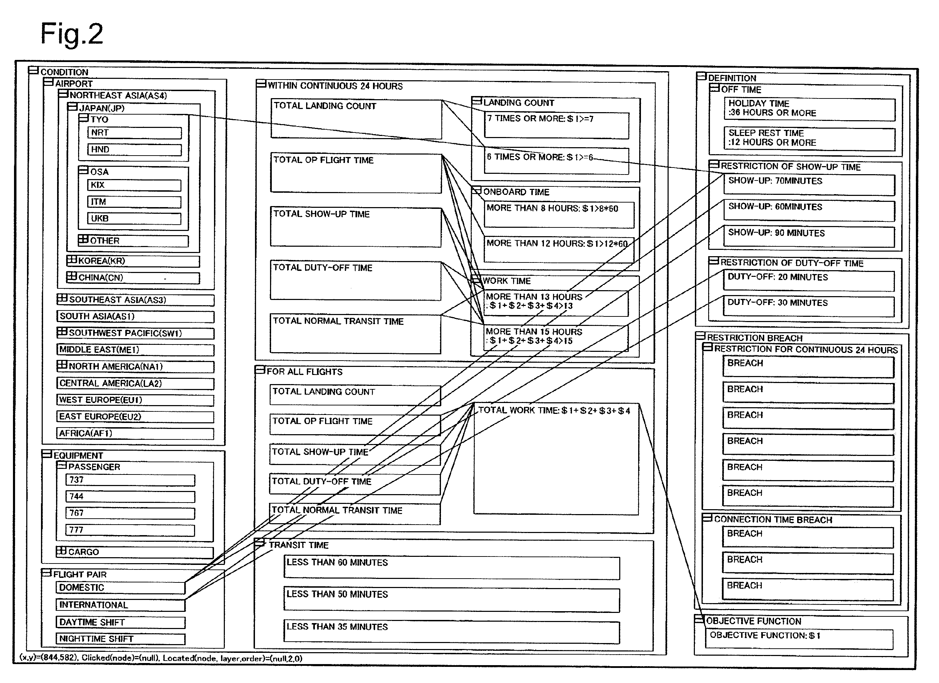

Here, Fig. 2 shows an example of a screen on which the display unit 10 displays such objects.

On the screen illustrated in Fig. 2, a plurality of objects expressed with rectangular figures are displayed. On the upper left corner of each object, text information is displayed in association with each object. In addition, an appearance of an object is not limited a rectangle shown in Fig. 2, but can be any appearance, such as a circle, another polygon, and another shape.

In Fig. 2, an object that is associated with text information of "condition" (upper left corner in Fig. 2) (hereinafter, "first object") includes objects of various sizes. Among the plurality of objects, a minimum unit object that does not contain other objects and an upper level object that contains a part of a plurality of the minimum unit objects are displayed.

Among the plurality of objects displayed within the first object, the minimum unit objects correspond to the condition objects that respectively indicate a plurality of subordinate conditions. The text information displayed within each condition object indicates a content of the subordinate condition.

For example, objects associated with text information "NRT" and "HND" illustrated in Fig. 2 do not contain other objects. That is, these objects are minimum unit objects and correspond to condition objects. The text information "NRT" and "HND" displayed within these condition objects respectively indicate classifications of a departure airport or an arrival airport of a flight, "Narita Airport" and "Haneda Airport".

An upper level object groups a part of the plurality of condition objects on the screen by containing a part of the plurality of minimum unit objects (condition objects) to. Hereinafter, the upper level objects displayed within the first object will be referred to as multi-condition contained objects. Within the multi-condition contained object, text information that indicates a superordinate concept of subordinate conditions of a plurality of condition objects that are grouped, or text information that extracts a common portion of subordinate conditions of a plurality of condition objects is displayed.

For example, an object that is associated with text information of "TYO" illustrated in Fig. 2 groups two condition objects ("NRT" and "HND"). In addition, "TYO" indicates Tokyo. Further, an object that is associated with text information of "Japan (JP)" illustrated in Fig. 2 groups a plurality of condition objects ("NRT", "HND", "KIX", and the like). These objects correspond to upper level objects. Then, the text information (TYO and Japan (JP)) that is displayed in association with each upper level object is information that is a superordinate concept of subordinate conditions of a plurality of condition objects that are grouped by each upper level object.

Further, an object that is associated with text information of "landing count" as illustrated in Fig. 2 groups a plurality of condition objects ("7 times or more" and "6 times or more"). Similarly, an object that is associated with text information of "within continuous 24 hours" as illustrated in Fig. 2 also groups a plurality of condition objects. These objects correspond to upper level objects. Then, text information (landing count, and within continuous 24 hours) that is associated with each object is displayed text information that extracts a common portion of conditions of a plurality of condition objects that are grouped. That is, a subordinate condition of a condition object that is associated with an upper level object associated with text information of "within continuous 24 hours" and text information of "7 times or more" that is contained by an upper level object associated with text information of "landing count" is "7 times or more landing count within continuous 24 hours".

For example, the condition storing unit 40 may store information relating to such a multi-condition contained object, that is, information indicating a plurality of condition objects (conditions) grouped by each multi-condition contained object and text information associated with each multi-condition contained object. Further, the condition storing unit 40 may store information that indicates whether the text information associated with each multi-condition contained object is text information that indicates a superordinate concept of subordinate conditions or text information that extracts a common portion of subordinate conditions. Then, by using the information, the display unit 10 may realize a display of multi-condition contained objects as illustrated in Fig. 2.

In addition, the display unit 10 may not display multi-condition contained objects in the first object and display only condition objects. However, when there are a lot of numbers of condition objects, displaying multi-condition contained objects and categorizing to display a plurality of condition objects by the display unit 10 facilitate intuitive comprehension of the contents. Further, the screen becomes organized and enhancing visibility.

Next, an object associated with text information of "restriction breach" (right end in the middle in Fig. 2) (hereinafter "second object") in Fig. 2 will be described. The second object contains objects of various sizes. Among the plurality of objects, a minimum unit object that does not contain other objects and an upper level object that contains a part of a plurality of minimum unit objects are displayed.

Among a plurality of objects displayed within the second object, the minimum unit object corresponds to a conclusion object. Within each conclusion object, text information that indicates each conclusion is displayed.

For example, objects associated with text information "breach" illustrated in Fig. 2 do not contain other objects. That is, these objects are minimum unit objects and correspond to conclusion objects. The text information (breach) displayed within the conclusion object indicates a conclusion.

Next, an object associated with text information of "definition" (upper right corner in Fig. 2) (hereinafter "third object") in Fig. 2 will be described. The third object contains objects of various sizes. Among the plurality of objects, a minimum unit object that does not contain other objects and an upper level object that contains a part of a plurality of minimum unit objects are displayed.

Among a plurality of objects displayed within the third object, the minimum unit object corresponds to a definition object. Within each definition object, text information that indicates each definition is displayed.

For example, among certain definition objects, there is a definition object that is associated with text information of "holiday time: 36 hours or more". This indicates a definition of "holiday", and, specifically, indicates "holiday is no attendance of continuous 36 hours or more".

In addition, a definition object that indicates a definition of the first condition wording, of which definitions differ for respective conditions, can be displayed in association with a condition object that indicates a subordinate condition as a premise of the definition. In Fig. 2, a definition object and a condition object are associated with each other by linking them with a line.

For example, it is supposed that a definition of a condition wording "Duty-off time" differs depending on a classification of either domestic flight or international flight. In Fig. 2, a definition object that is associated with text information of "Duty-off time: 30 minutes" is displayed besides a definition object that is associated with text information of "Duty-off time: 20 minutes". That is, a definition of "Duty-off time is 20 minutes or more" and a definition of "Duty-off time is 30 minutes or more" are displayed. Then, the definitions are respectively associated with condition objects of subordinate conditions that are premises of the definitions with lines. Specifically, "Duty-off time: 20 minutes" is associated with "domestic flight". The other side, "Duty-off time: 30 minutes" is associated with "international flight". In other words, it is indicated that Duty-off time of a crew who works on board a domestic flight is 20 minutes or more, and Duty-off time of a crew who works on board an international flight is 30 minutes or more.

An upper level object displayed within the third object groups a plurality of definition objects depending on contents of definitions. Then, within the upper level object, either text information that indicates a superordinate concept of definitions of a plurality of definition objects that are grouped by the upper level object or text information that extracts a common portion of definitions of the plurality of definition objects is displayed.

For example, the definition storing unit 70 may store information relating to such upper level objects displayed within the third object, that is, information that indicates a plurality of definition objects (definitions) that are grouped by the respective upper level objects, and text information that is associated with the respective upper level objects. Further, the definition storing unit 70 may store information that indicates whether text information associated with the respective upper level objects is text information that indicates a superordinate concept of the definitions or text information that extracts a common portion of the definitions. Then, the display unit 10 may realize a display by using the information as illustrated in Fig. 2.

In addition, the display unit 10 may not display an upper level object within the third object and display only definition objects. However, when there are a lot of numbers of definition objects, displaying an upper level object and categorizing to display a plurality of definition objects by the display unit 10, it becomes easy to comprehend the displaying contents. Further, the screen becomes organized and enhancing visibility.

Returning to Fig. 1, the input receiving unit 20 receives an input for grouping a plurality of condition objects. The group may include either a plurality of condition objects or only one condition object. In addition, when the display unit 10 is configured to display a conclusion object on the screen, the input receiving unit 20 may be able to receive an input for including one conclusion object in each group. When the display unit 10 is configured to display a multi-condition contained object on the screen, the input receiving unit 20 may be able to receive an input for including a condition contained object in a group.

A content of the input for grouping is not particularly restricted. However, for example, an input for mutually linking two objects with a line on the screen may be received. In such a case, one or more networks in which a plurality of objects are linked one after another with these lines are formed. Thus, all objects included in one network are grouped into one group.

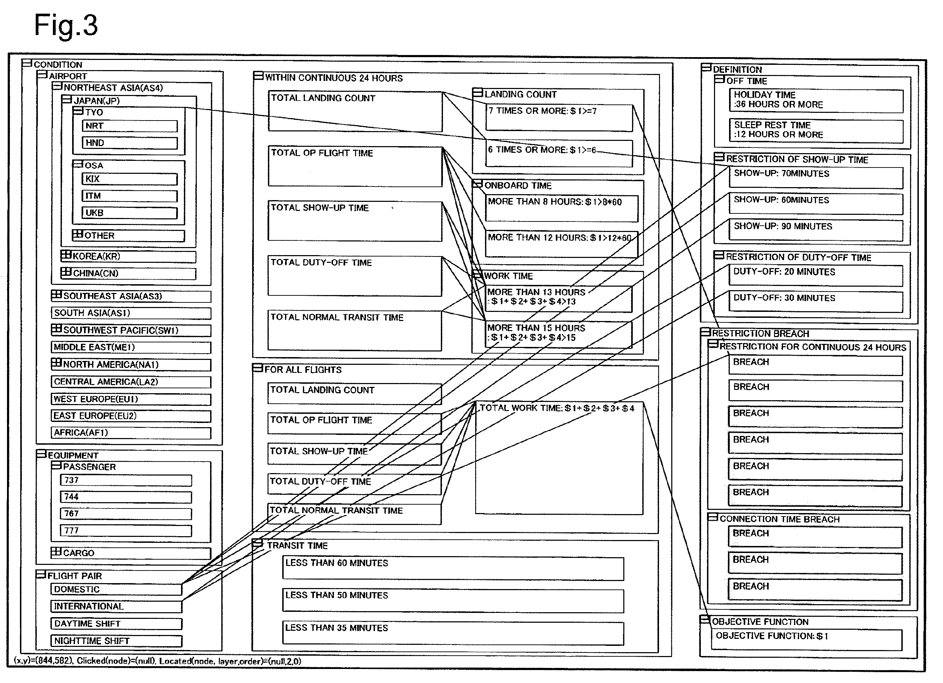

In addition, the input receiving unit 20 may receive only an input of a line that links one conclusion object to one condition object and/or an input of a line that links one conclusion object to one multi-condition contained object, as an input for grouping. In other words, the input receiving unit 20 may reject an input of a line that links condition objects with each other, an input of a line that links multi-condition contained objects with each other, and an input of a line that links a condition object to a multi-condition contained object, as an input for grouping. In such a case, one conclusion object and one or a plurality of condition objects and/or multi-condition contained objects that is directly linked to the conclusion object with a line are grouped into one group. In addition, one condition object may be linked to a plurality of conclusion objects with lines. Further, one multi-condition contained object may be linked to a plurality of conclusion objects with lines. That is, one condition object and/or one multi-condition contained object may be included across a plurality of groups. Fig. 3 illustrates an example. In the illustrated example, a conclusion object "breach" is associated with a condition object associated with text information of "domestic" and a condition object associated with text information of "7 times or more" with lines. In this case, these three objects are grouped into one group.

In addition, the input receiving unit 20 may be able to receive an input for adding a conclusion object on the screen. Then, the display unit 10 may additionally display a new conclusion object on the screen in accordance with the input. In principle, one conclusion object belongs to one group. As such, when there is no more conclusions object that does not belong to any group on the screen, no more new rule (a network that mutually links a plurality of objects with a line) can be formed. Such inconvenience can be cancelled by configured to be able to add a conclusion object on the screen in accordance with a user input.

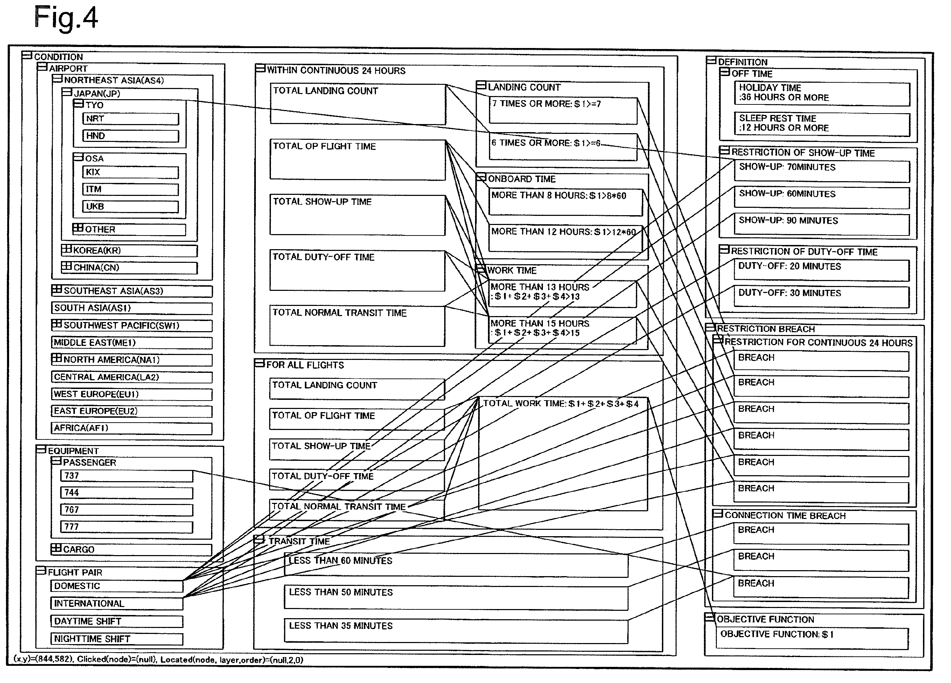

As illustrated in Fig. 3, the input receiving unit 20 can receive an input for forming another rule (an input that forms another network) in a state that networks relating to one or more rules are displayed on the screen. Fig. 4 illustrates an example. In a screen illustrated in Fig. 4, a plurality of conclusion objects are respectively connected to lines, and networks relating to a plurality of groups are concurrently displayed.

Means for receiving an input that the input receiving unit 20 uses for grouping is not particularly restricted, and can be realized by using any input device, such as a touch panel display, a keyboard, a mouse, and an operation button.

The rule registration unit 30 generates a rule that links a predetermined conclusion to a predetermined rule for each group, and registers the rule. When a plurality of condition objects are included in a group, the rule registration unit 30 generates a rule that links a predetermined conclusion to a first condition in which all of a plurality of subordinate conditions that are identified by the plurality of condition objects are combined by ANDs, and registers the rule. On other side, when only one condition object is included in a group, the rule registration unit 30 generates a rule that links a predetermined conclusion to one subordinate condition identified by the one condition object, and registers the rule. The rule registration unit 30 performs such processing for each group.

In addition, when a conclusion object is included in each group, the rule registration unit 30 may generate a rule that links a predetermined conclusion identified by the conclusion object to the above-described condition, and register the rule to the rule registration unit 60.

In case that no conclusion object is displayed on the screen, one conclusion is predefined, whereby the rule registration unit 30 can generate a rule that links the conclusion to the above-described condition, and register the rule to the rule storing unit 60.

The rule registration unit 30 can identify an object included in each group in accordance with an input content received by the input receiving unit 20. For example, when the input receiving unit 20 receives an input for mutually linking objects with a line on the screen as an input that groups a plurality of objects, the rule registration unit 30 can identify a plurality of objects that are associated with each other with lines (all objects included in one network) as objects included in one group. Further, as illustrated in Fig. 3, when the input receiving unit 20 receives only an input of a line that link one conclusion object to one condition object and/or one multi-condition contained object as an input for grouping a plurality of objects, the rule registration unit 30 can identify a conclusion object, and one or a plurality of condition objects and/or one or a plurality of multi-condition contained objects that are directly linked to the conclusion object with one line as objects included in one group. The rule registration unit 30 may identify two objects that contain both ends of each line (including a case that an end of a line contacts a contour of an object) on the screen, and identify the identified two objects as two objects that are associated with each other by the line. In addition, when an end of a line is located at an area where a plurality of objects overlap mutually, the rule registration unit 30 may identify the forefront object as an object that is associated with other objects by the line.

For example, in the example illustrated in Fig. 3, a condition object that indicates a subordinate condition of "domestic (flight)" and a condition object that indicates a subordinate condition of "7 or more landing count within continuous 24 hours" are associated with one conclusion object "breach". In such a case, the rule registration unit 30 generates a rule in that a flight that is "domestic" and becomes "7 or more landing count within continuous 24 hours" is "breach", and registers the rule to the rule storing unit 60.

In addition, when multi-condition contained objects are displayed on the screen, the rule registration unit 30 can determine whether text information associated with each multi-condition contained object is text information that indicates a superordinate concept of subordinate conditions or text information that extracts a common portion of subordinate conditions by using the above-described information stored in the condition storing unit 40. Then, when the text information associated with each multi-condition contained object is text information that extracts a common portion of subordinate conditions, the rule registration unit 30 can recognize contents of subordinate conditions of condition objects that are grouped by the multi-condition contained object on the screen by also using such text information.

In addition, when a multi-condition contained object is included in a group, the rule registration unit 30 generates a second condition in which all of a plurality of subordinate conditions that are identified by a plurality of condition objects that are grouped by the multi-condition contained object are combined by ORs. Then, when another condition object is included in the group, the rule registration unit 30 can generate a first condition in which a subordinate condition identified by the other condition object and the second condition are combined by ANDs, and generate a rule by linking a predetermined conclusion to the first condition. On other side, when no other condition object is included in the group, the rule registration unit 30 can generate a rule that links the predetermined conclusion to the second condition.

For example, it is supposed that a multi-condition contained object that is associated with text information of "TYO" that contains condition objects of "NRT" and "HND" and a condition object that indicates a subordinate condition of "7 or more landing count within continuous 24 hours" are associated with one conclusion object "breach". In such a case, the rule registration unit 30 generates a rule in that a flight that is "departures from NRT (Narita Airport)" or "departures from HND (Haneda Airport)" and becomes "7 or more landing count within continuous 24 hours" is "breach", and stores the rule to the rule storing unit 60.

According to the present exemplary embodiment, an operator who generates a rule can generate a rule only by inputting for grouping a plurality of objects displayed on the screen. That is, the operator does not have to write a rule as text information by using a text editor from scratch.

In this way, the operator can intuitively comprehend consistency and discrepancy between a certain rule and another rule based on visual information, such as a position of an object, during generation of the rule. Thus, the operator can decrease errors, such as redundantly generating the same rule or omission of generating a rule. As a consequence, the operator can efficiently form a rule with reducing errors.

Further, in the present exemplary embodiment, a definition object that indicates a definition of a condition wording can be displayed on the screen for generating a rule. Thus, even when there is obscurity in a wording included in a subordinate condition, the operator can understand a meaning thereof on the screen. Thus, the operator does not have to perform troublesome processing such as switching of screens. As such, the operator can decrease processing errors and the like.

Further, in the present exemplary embodiment, a definition object that indicates a definition of a condition wording, of which definition differs for each condition, can be displayed in association with a condition object that indicates a subordinate condition as a premise of the definition (for example, being displayed by linking with a line). Thus, text information that indicates a subordinate condition as a premise does not have to be necessarily displayed within such a definition object. As a result, the present exemplary embodiment can decrease text information within the definition object, and provide effects of enhanced visibility and easier comprehension of the content, and the like.

In addition, the rule management device of the present exemplary embodiment may further include a rule display unit and a selection receiving unit.

The rule display unit displays a plurality of condition objects that respectively indicate a plurality of conditions on the screen, and groups and displays condition objects that respectively indicate one or a plurality of subordinate conditions included in each rule based on a rule registered by the rule registration unit 30 (refer to Fig. 4). In addition, Fig. 4 illustrates each group by a line that connects one conclusion object and one condition object and/or a line that connects one conclusion object and one multi-condition contained object. That is, a conclusion object and one or a plurality of condition objects and/or one or a plurality of multi-condition contained objects that are directly linked to the conclusion object with a line are objects included in one group.

The selection receiving unit receives a user input for selecting one of a plurality of objects displayed by the rule display unit. Then, the rule display unit displays one or a plurality of groups that include the selected object distinguishably from other groups.

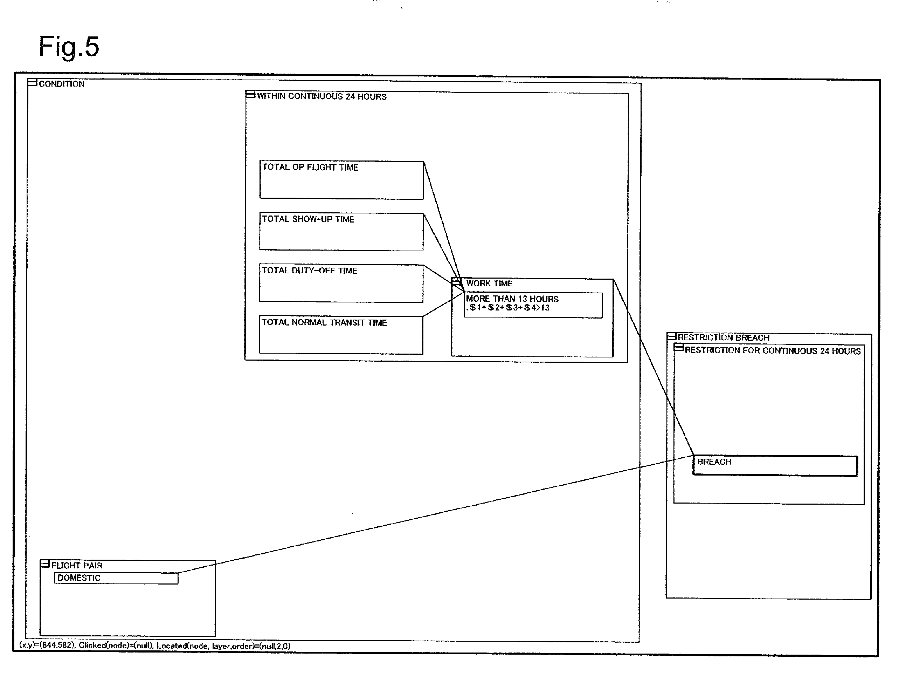

For example, when the selection receiving unit receives an input for selecting one conclusion object from the display illustrated in Fig. 4, as illustrated in Fig. 5, the rule display unit can display a condition object and/or a multi-condition object that are included in the same group of the conclusion object in a manner distinguishable from other objects. In Fig. 5, the rule display unit highlights a contour of the selected conclusion object with a bold line. Then, the rule display unit realizes a distinguishable display by displaying only a condition object and/or a multi-condition object included in the selected conclusion object without displaying other objects. However, without limitation thereto, the rule display unit can use any means, such as, displaying with different colors or darkening other condition objects.

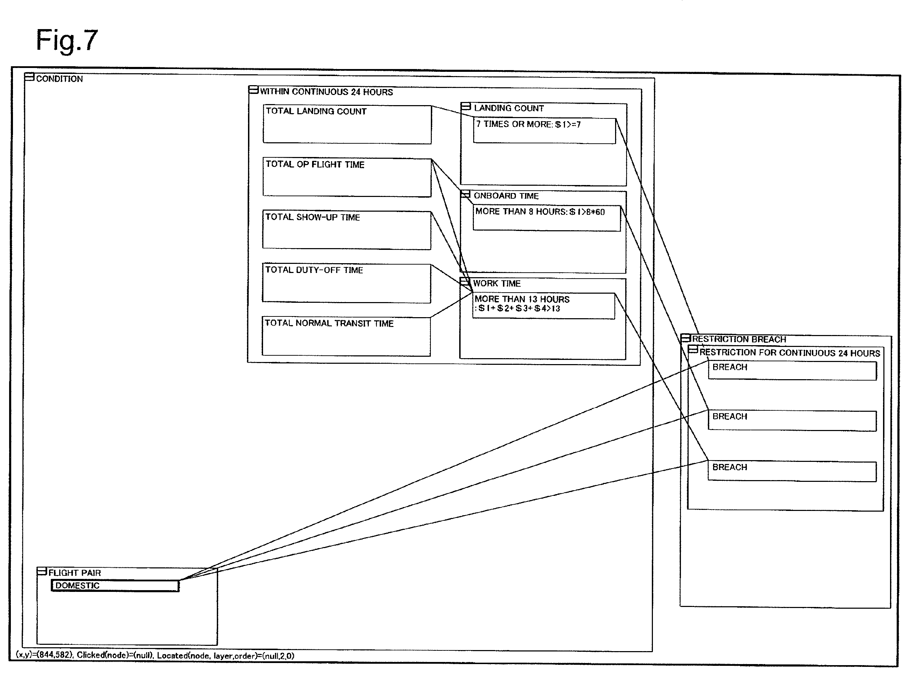

Moreover, when the selection receiving unit receives an input for selecting one condition object or one multi-condition object from the display illustrated in Fig. 4, the rule display unit can display a plurality of objects that are included in one or a plurality of groups to which the selected condition object or multi-condition object belongs in a manner distinguishable from other objects. Fig. 7 illustrates an example when one condition object is selected. In Fig. 7, a contour of the selected conclusion object is highlighted with a bold line. Then, a plurality of objects included in a plurality of groups to which the selected condition object belongs are displayed in a manner distinguishable from other objects. As such, when the selected condition object or multi-condition object is included in a plurality of groups, the rule display unit can display a plurality of objects included in the plurality of groups in a manner distinguishable from other objects.

Further, as illustrated in Fig. 4, the present exemplary embodiment can display a part of a plurality of conclusion objects in a manner grouped by an upper level object displayed within the second object, for example, depending on a user operation.

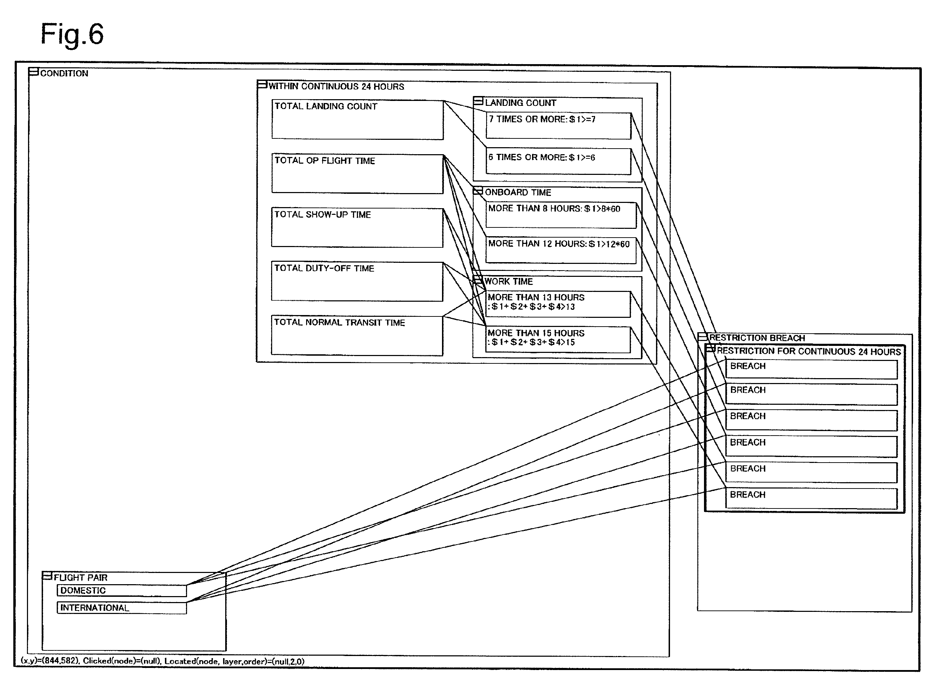

In such a case, the selection receiving unit may receive an input for selecting one upper level object displayed within the second object. In such a case, as illustrated in Fig. 6, the rule display unit can display a plurality of condition objects and/or a plurality of multi-condition objects included in the same group of the plurality of conclusion objects that are grouped by the upper level object in a manner distinguishable from other objects.

In addition, the display unit 10 can display only a conclusion object without displaying an upper level object in the second object. However, when there are a lot of numbers of conclusion objects, it is facilitates intuitive comprehension of the contents to display an upper level object and to categorize to display a plurality of conclusion objects. Further, the screen becomes organized and enhancing visibility.

In addition, each rule may be modified on the screen that is displayed by the rule display unit as illustrated in Fig. 4. That is, the rule management device 1 may receive an input for modifying a content of grouping on the screen (an input for adding an object to a certain group and an input for deleting an object from a certain group), and update a content of a rule stored in the rule storing unit 60 in accordance with the input.

Further, the rule management device 1 of the present exemplary embodiment may include a rule description generation and output unit. The rule description generation and output unit generates a description that indicates each rule based on a rule registered by the rule registration unit 30, and outputs the description. For example, the rule description generation and output unit can retain template description data that link a condition to a conclusion (for example, when ..., and it is ...) in advance, and generate a description that indicates a rule by inserting a condition and a conclusion in the predetermined positions of the template description.

### «Supplementary note»

The following inventions are explained according to the above-mentioned explanation.

### <Invention 1>

A rule management device comprising:
display means for displaying a plurality of condition objects that respectively indicate a plurality of conditions on a screen;
input receiving means for receiving an input for grouping the plurality of condition objects on the screen; and
rule registration means for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

### <Invention 2>

The rule management device according to invention 1, wherein
the display means displays one or a plurality of conclusion objects that indicate the predetermined conclusion on the screen;
the input receiving means receives an input for including one of the conclusion objects in each of the group; and
the rule registration means generates a rule that links the predetermined conclusion identified by the conclusion object included in each of the group to a condition included in each group, and registers the rule.

### <Invention 3>

The rule management device according to invention 1 or 2, wherein
the display means displays a multi-condition contained object that groups a part of the plurality of condition objects on the screen;
the input receiving means can receive an input for including the multi-condition contained object in the group;
the rule registration means, when the group includes the multi-condition contained object, generates a second condition in which all the plurality of conditions that are identified by the plurality of condition objects grouped by the multi-condition contained object are combined by ORs, when the group includes another one of the condition objects, generates the first condition in which a condition that is identified by the other one of the condition objects and the second condition are combined by ANDs, and, when the group includes no other one of the condition objects, generates a rule that links the predetermined conclusion to the second condition.

### <Invention 4>

The rule management device according to any one of inventions 1 to 3, wherein
the input receiving means receives an input for linking the objects mutually with a line on the screen; and
the rule registration means generates the rule by treating the plurality of objects that are mutually associated with the line as the objects included in one of the groups.

### <Invention 5>

The rule management device according to any one of inventions 1 to 4, wherein
the display means displays a definition object that indicates a definition of a condition wording included in the conditions on the screen.

### <Invention 6>

The rule management device according to invention 5, wherein
the condition wording includes a first condition wording of which definition differs for each of the conditions; and
the display means displays the definition object that indicates a definition of the first condition wording and the condition object that indicates the condition which is a premise of the definition by relating them.

### <Invention 7>

The rule management device according to invention 6, wherein
the display means links displays the definition object that indicates a definition of the first condition wording and the condition object that indicates the condition which is a premise of the definition by linking them with a line.

### <Invention 8>

The rule management device according to any one of inventions 1 to 7, further comprising:
rule display means for displaying a plurality of condition objects that respectively indicate a plurality of conditions on a screen, and displays the condition objects that respectively indicate one or a plurality of conditions included in each rule with grouping based on the rule registered by the rule registration means; and
selection receiving means for receiving one selection input among the plurality of condition objects displayed by the rule display means, wherein
the rule display means, when the selection receiving means receives a selection input of one of the condition objects, displays one or a plurality of groups that include the selected condition object in a manner of distinguishing it or them from other groups.

### <Invention 9>

The rule management device according to any one of inventions 1 to 7, further comprising:
rule description generation and output means for generating and outputting a description that indicates each rule based on the rule registered by the rule registration means.

### <Invention 10>

A program for causing a computer to function as:
display means for displaying a plurality of condition objects that respectively indicate a plurality of conditions on a screen;
input receiving means for receiving an input for grouping the plurality of condition objects on the screen; and
rule registration means for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

### <Invention 10-2>

The program according to invention 10, wherein
to the display means, displaying one or a plurality of conclusion objects that indicate the predetermined conclusion on the screen;
to the input receiving means, receiving an input for including one of the conclusion objects in each of the group; and
to the rule registration means, generating a rule that links the predetermined conclusion identified by the conclusion object included in each of the group to a condition included in each group, and registers the rule.

### <Invention 10-3>

The program according to invention 10 or 10-2, wherein
to the display means, displaying a multi-condition contained object that groups a part of the plurality of condition objects on the screen;
to the input receiving means, receiving an input for including the multi-condition contained object in the group;
to the rule registration means, when the group includes the multi-condition contained object, generating a second condition in which all the plurality of conditions that are identified by the plurality of condition objects grouped by the multi-condition contained object are combined by ORs, when the group includes another one of the condition objects, generating the first condition in which a condition that is identified by the other one of the condition objects and the second condition are combined by ANDs, and, when the group includes no other one of the condition objects, generating a rule that links the predetermined conclusion to the second condition.

### <Invention 10-4>

The program according to any one of inventions 10 to 10-3, wherein
to the input receiving means, receiving an input for linking the objects mutually with a line on the screen; and
to the rule registration means, generating the rule by treating the plurality of objects that are mutually associated with the line as the objects included in one of the groups.

### <Invention 10-5>

The program according to any one of inventions 10 to 10-4, wherein
to the display means, displaying a definition object that indicates a definition of a condition wording included in the conditions on the screen.

### <Invention 10-6>

The program according to invention 10-5, wherein
the condition wording includes a first condition wording of which definition differs for each of the conditions; and
to the display means, displaying the definition object that indicates a definition of the first condition wording and the condition object that indicates the condition which is a premise of the definition by relating them.

### <Invention 10-7>

The program according to invention 10-6, wherein
to the display means, linking displays the definition object that indicates a definition of the first condition wording and the condition object that indicates the condition which is a premise of the definition by linking them with a line.

### <Invention 10-8>

The program according to any one of inventions 10 to 10-7, further for causing a computer to function as:
rule display means for displaying a plurality of condition objects that respectively indicate a plurality of conditions on a screen, and displays the condition objects that respectively indicate one or a plurality of conditions included in each rule with grouping based on the rule registered by the rule registration means; and
selection receiving means for receiving one selection input among the plurality of condition objects displayed by the rule display means,
wherein
to the rule display means, when the selection receiving means receives a selection input of one of the condition objects, displaying one or a plurality of groups that include the selected condition object in a manner of distinguishing it or them from other groups.

### <Invention 10-9>

The program according to any one of inventions 10 to 10-7, further for causing a computer to function as:
rule description generation and output means for generating and outputting a description that indicates each rule based on the rule registered by the rule registration means.

### <Invention 11 >

A rule management method wherein a computer executes:
a display step for displaying a plurality of condition objects that respectively indicate a plurality of conditions on a screen;
an input receiving step for receiving an input for grouping the plurality of condition objects on the screen; and
a rule registration step for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

### <Invention 11-2>

The rule management method according to invention 11, wherein
in the display step, displaying one or a plurality of conclusion objects that indicate the predetermined conclusion on the screen;
in the input receiving step, receiving an input for including one of the conclusion objects in each of the group; and
in the rule registration step, generating a rule that links the predetermined conclusion identified by the conclusion object included in each of the group to a condition included in each group, and registers the rule.

### <Invention 11-3>

The rule management method according to invention 11 or 11-2, wherein
in the display step, displaying a multi-condition contained object that groups a part of the plurality of condition objects on the screen;
in the input receiving step, receiving an input for including the multi-condition contained object in the group;
in the rule registration step, when the group includes the multi-condition contained object, generating a second condition in which all the plurality of conditions that are identified by the plurality of condition objects grouped by the multi-condition contained object are combined by ORs, when the group includes another one of the condition objects, generating the first condition in which a condition that is identified by the other one of the condition objects and the second condition are combined by ANDs, and, when the group includes no other one of the condition objects, generating a rule that links the predetermined conclusion to the second condition.

### <Invention 11-4>

The rule management method according to any one of inventions 11 to 11-3, wherein
in the input receiving step, receiving an input for linking the objects mutually with a line on the screen; and
in the rule registration step, generating the rule by treating the plurality of objects that are mutually associated with the line as the objects included in one of the groups.

### <Invention 11-5>

The rule management method according to any one of inventions 11 to 11-4, wherein
in the display step, displaying a definition object that indicates a definition of a condition wording included in the conditions on the screen.

### <Invention 11-6>

The rule management method according to invention 11-5, wherein
the condition wording includes a first condition wording of which definition differs for each of the conditions; and
in the display step, displaying the definition object that indicates a definition of the first condition wording and the condition object that indicates the condition which is a premise of the definition by relating them.

### <Invention 11-7>

The rule management method according to invention 11-6, wherein
in the display step, linking displays the definition object that indicates a definition of the first condition wording and the condition object that indicates the condition which is a premise of the definition by linking them with a line.

### <Invention 11-8>

The rule management method according to any one of inventions 11 to 11-7, wherein a computer further executes:
rule display step for displaying a plurality of condition objects that respectively indicate a plurality of conditions on a screen, and displays the condition objects that respectively indicate one or a plurality of conditions included in each rule with grouping based on the rule registered by the rule registration step; and
selection receiving step for receiving one selection input among the plurality of condition objects displayed by the rule display step, wherein
in the rule display step, when the selection receiving step receives a selection input of one of the condition objects, displaying one or a plurality of groups that include the selected condition object in a manner of distinguishing it or them from other groups.

### <Invention 11-9>

The rule management method according to any one of inventions 10 to 10-7, wherein a computer further executes:
a rule description generation and output step for generating and outputting a description that indicates each rule based on the rule registered by the rule registration step.

This application is based upon and claims the benefit of priority from Japanese patent application No. 2012-164190, filed on July 24, 2012, the disclosure of which is incorporated herein in its entirety by reference.

## Claims

1. A rule management device comprising:
display means for displaying a plurality of condition objects that respectively indicate a plurality of conditions on a screen;
input receiving means for receiving an input for grouping the plurality of condition objects on the screen; and
rule registration means for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

2. The rule management device according to claim 1, wherein
the display means displays one or a plurality of conclusion objects that indicate the predetermined conclusion on the screen;
the input receiving means receives an input for including one of the conclusion objects in each of the group; and
the rule registration means generates a rule that links the predetermined conclusion identified by the conclusion object included in each of the group to a condition included in each group, and registers the rule.

3. The rule management device according to claim 1 or 2,
wherein
the display means displays a multi-condition contained object that groups a part of the plurality of condition objects on the screen;
the input receiving means can receive an input for including the multi-condition contained object in the group;
the rule registration means, when the group includes the multi-condition contained object, generates a second condition in which all the plurality of conditions that are identified by the plurality of condition objects grouped by the multi-condition contained object are combined by ORs, when the group includes another one of the condition objects, generates the first condition in which a condition that is identified by the other one of the condition objects and the second condition are combined by ANDs, and, when the group includes no other one of the condition objects, generates a rule that links the predetermined conclusion to the second condition.

4. The rule management device according to any one of claims 1 to 3, wherein
the input receiving means receives an input for linking the objects mutually with a line on the screen; and
the rule registration means generates the rule by treating the plurality of objects that are mutually associated with the line as the objects included in one of the groups.

5. The rule management device according to any one of claims 1 to 4, wherein
the display means displays a definition object that indicates a definition of a condition wording included in the conditions on the screen.

6. The rule management device according to claim 5, wherein
the condition wording includes a first condition wording of which definition differs for each of the conditions; and
the display means displays the definition object that indicates a definition of the first condition wording and the condition object that indicates the condition which is a premise of the definition by relating them.

7. The rule management device according to claim 6, wherein
the display means links displays the definition object that indicates a definition of the first condition wording and the condition object that indicates the condition which is a premise of the definition by linking them with a line.

8. The rule management device according to any one of claims 1 to 7, further comprising:
rule display means for displaying a plurality of condition objects that respectively indicate a plurality of conditions on a screen, and displays the condition objects that respectively indicate one or a plurality of conditions included in each rule with grouping based on the rule registered by the rule registration means; and
selection receiving means for receiving one selection input among the plurality of condition objects displayed by the rule display means, wherein
the rule display means, when the selection receiving means receives a selection input of one of the condition objects, displays one or a plurality of groups that include the selected condition object in a manner of distinguishing it or them from other groups.

9. The rule management device according to any one of claims 1 to 7, further comprising:
rule description generation and output means for generating and outputting a description that indicates each rule based on the rule registered by the rule registration means.

10. A program for causing a computer to function as:
display means for displaying a plurality of condition objects that respectively indicate a plurality of conditions on a screen;
input receiving means for receiving an input for grouping the plurality of condition objects on the screen; and
rule registration means for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.

11. A rule management method wherein a computer executes:
a display step for displaying a plurality of condition objects that respectively indicate a plurality of conditions on a screen;
an input receiving step for receiving an input for grouping the plurality of condition objects on the screen; and
a rule registration step for performing processing, for each of the group, for, when the group includes the plurality of condition objects, generating a rule that links a predetermined conclusion to a first condition in which all the plurality of conditions that are identified by the plurality of condition objects are combined by ANDs and registering the rule, and, when the group includes only one of the condition objects, generating a rule that links a predetermined conclusion to one of the conditions that is identified by the one of the condition objects and registering the rule.
